# EUROPEAN PATENT APPLICATION

(11) **EP 4 005 400 A1**
(43) Date of publication of application: **01.06.2022**
(21) Application number: 20210146.5
(22) Date of filing: 26.11.2020
(51) Int. Cl.: A23L 11/40, A23C 20/00, A23C 20/02, A23L 11/45, A23L 29/212, A23L 29/256

(54) **A METHOD OF PRODUCING A STACKED, SLICED FOOD ANALOGUE**

(71) Applicant: Kerry Luxembourg S.a.r.l., 1820 Luxembourg (LU)
(72) Inventor: TOBIN, Joan, County Cork (IE); HAMMERSLEY, Robert, County Cork (IE); KELLY, Sarah, County Cork (IE); DOYLE, Liam, County Kerry (IE); O'CONNOR, Clara, County Kildare (IE); BOURKE, Neil, County Kildare (IE); O'SULLIVAN, Maurice, County Kildare (IE); PISCIOTTA, Antonella, 24030 Mozzo (BG) (IT)
(74) Representative: FRKelly

(57) **Abstract**

The present invention relates to a method of producing a stacked, sliced food analogue. The invention finds utility in the field of food production, in particular in the field of production of plant-based food analogues, and specifically plant-based cheese analogues.

## Description

### Field of the Invention

The present invention relates to a method of producing a stacked, sliced food analogue. The invention finds utility in the field of food production, in particular in the field of production of plant-based food analogues, and specifically plant-based cheese analogues.

### Background to the Invention

The global vegan cheese market is valued over EUR1.8 billion. A major factor driving growth of the global vegan food market is increasing acceptance to plant-based food products amongst consumers.

Vegetarian and vegan diets provide certain benefits to consumers such as improved nutritional content, less environmental impact, and adherence to personal ethical beliefs.

For these reasons, the number of people considering turning to vegetarian or vegan food products is increasing. There is a need to develop an increasing number of vegetarian or vegan food products that can act as alternatives to traditional or well-known non-vegetarian and non-vegan food products.

Plant-based food product analogues are required to imitate and replace traditional non-vegetarian and non-vegan food products. In particular, there is a need to provide plant-based food product analogues that exhibit similar organoleptic characteristics as traditional non-vegetarian and non-vegan food products.

There is an additional need to provide such plant-based food product analogues in a convenient and practical way, while reducing the requirement for superfluous packaging and thereby reducing the complexity of the method of preparation, associated costs, and ultimately the environmental impact.

### Summary of the Invention

According to a first aspect of the present invention, there is provided a method of producing a stacked, sliced food analogue; the method comprising the steps of:
(a) providing a food analogue mass;
(b) forming at least a first and a subsequent slice from the food analogue mass; and
(c) contacting the first and subsequent slices to form a stack.

Optionally, the food analogue is a cheese analogue.

Optionally, the method is a method of producing a stacked, sliced cheese analogue and comprises the steps of:
(a) providing a cheese analogue mass;
(b) forming at least a first and a subsequent slice from the cheese analogue mass; and
(c) contacting the first and subsequent slices to form a stack.

Optionally, the food or cheese analogue mass comprises protein, fat, thickener, and gelling agent.

Optionally, the food or cheese analogue further comprises water. Further optionally, the food or cheese analogue mass comprises protein, fat, thickener, gelling agent, and water.

Optionally, the food or cheese analogue mass comprises at least 30% (w/w) water. Further optionally, the food or cheese analogue mass comprises at least 35%, optionally at least 40%, optionally at least 45%, optionally at least 45.5%, optionally at least 50%, optionally at least 54%, optionally at least 55%, optionally at least 60% (w/w) water.

Optionally, the food or cheese analogue mass comprises at least 54% (w/w) water.

Optionally, the food or cheese analogue mass comprises at least 30% (w/w) liquid water. Further optionally, the food or cheese analogue mass comprises at least 35%, optionally at least 40%, optionally at least 45%, optionally at least 45.5%, optionally at least 50%, optionally at least 54%, optionally at least 55%, optionally at least 60% (w/w) liquid water.

Preferably, the food or cheese analogue mass comprises at least 45.5% (w/w) liquid water.

Optionally or additionally, the food or cheese analogue mass comprises at least 5.0% (w/w) gaseous water. Further optionally, the food or cheese analogue mass comprises at least 5.5%, optionally at least 6.0%, optionally at least 6.5, optionally at least 7.0%, optionally at least 7.5%, optionally at least 8.5%, optionally at least 9.0%, optionally at least 9.5% (w/w), optionally at least 10.0% (w/w) liquid water.

Preferably, the food or cheese analogue mass comprises at least 8.5% (w/w) gaseous water.

Preferably, the food or cheese analogue mass comprises at least 45% (w/w) liquid water and at least 8.5% (w/w) gaseous water.

Optionally, the food or cheese analogue mass comprises plant protein. Further optionally, the food or cheese analogue mass comprises vegetable protein. Still further optionally, the food or cheese analogue mass comprises vegetable protein. Still further optionally, the food or cheese analogue mass comprises legume protein. Still further optionally, the food or cheese analogue mass comprises protein from alfalfa, clover, bean, pea, chickpea, lentil, lupin, mesquite, carob, soybean, peanut, tamarind, or combinations each thereof.

Preferably, the food or cheese analogue mass comprises pea protein. Optionally, the food or cheese analogue mass comprises Pisum protein. Further optionally, the food or cheese analogue mass comprises Pisum sativum protein.

Optionally, the food or cheese analogue mass comprises at least 2.5% (w/w) protein. Further optionally, the food or cheese analogue mass comprises at least 3.0%, optionally at least 3.5%, optionally at least 4.0%, optionally at least 4.5%, optionally at least 5.0%, optionally at least 5.5%, optionally at least 6.0%, optionally at least 6.5%, optionally at least 7.0%, optionally at least 7.5%, optionally at least 10.0%, optionally at least 12.5%, optionally at least 15.0%, optionally at least 17.5%, optionally at least 20.0%, optionally at least 22.5% (w/w) protein.

Preferably, the food or cheese analogue mass comprises at least 5.0% (w/w) protein.

Optionally, the food or cheese analogue mass comprises protein isolate.

Optionally, the food or cheese analogue mass comprises plant protein isolate. Further optionally, the food or cheese analogue mass comprises vegetable protein isolate. Still further optionally, the food or cheese analogue mass comprises vegetable protein isolate. Still further optionally, the food or cheese analogue mass comprises legume protein isolate. Still further optionally, the food or cheese analogue mass comprises protein isolate from alfalfa, clover, bean, pea, chickpea, lentil, lupin, mesquite, carob, soybean, peanut, tamarind, or combinations each thereof.

Preferably, the food or cheese analogue mass comprises pea protein isolate. Optionally, the food or cheese analogue mass comprises Pisum protein isolate. Further optionally, the food or cheese analogue mass comprises Pisum sativum protein isolate.

Optionally, the food or cheese analogue mass comprises a saturated fat. Further optionally, the food or cheese analogue mass comprises a saturated oil.

Alternatively, the food or cheese analogue mass comprises an unsaturated fat. Further alternatively, the food or cheese analogue mass comprises an unsaturated oil.

Optionally, the food or cheese analogue mass comprises a monounsaturated fat. Further optionally, the food or cheese analogue mass comprises a monounsaturated oil.

Alternatively, the food or cheese analogue mass comprises a polyunsaturated fat. Further alternatively, the food or cheese analogue mass comprises a polyunsaturated oil.

Optionally, the food or cheese analogue mass comprises plant fat. Optionally, the food or cheese analogue mass comprises palm fat, soybean fat, rapeseed fat, sunflower fat, peanut fat, cottonseed fat, coconut fat, olive fat, or combinations each thereof. Further optionally, the food or cheese analogue mass comprises fruit fat. Still further optionally, the food or cheese analogue mass comprises nut fat. Still further optionally, the food or cheese analogue mass comprises drupe fat.

Optionally, the food or cheese analogue mass comprises plant oil. Optionally, the food or cheese analogue mass comprises palm oil, soybean oil, rapeseed oil, sunflower oil, peanut oil, cottonseed oil, coconut oil, olive oil, or combinations each thereof. Further optionally, the food or cheese analogue mass comprises fruit oil. Still further optionally, the food or cheese analogue mass comprises nut oil. Still further optionally, the food or cheese analogue mass comprises drupe oil.

Preferably, the food or cheese analogue mass comprises coconut fat. Further preferably, the food or cheese analogue mass comprises coconut oil. Optionally, the food or cheese analogue mass comprises Cocos fat. Further optionally, the food or cheese analogue mass comprises Cocos oil. Optionally, the food or cheese analogue mass comprises Cocos nucifera fat. Further optionally, the food or cheese analogue mass comprises Cocos nucifera oil.

Optionally, the food or cheese analogue mass comprises at least 10% (w/w) fat. Further optionally, the food or cheese analogue mass comprises at least 15%, optionally at least 20%, optionally at least 25%, optionally at least 25.5%, optionally at least 25.7%, optionally at least 30%, optionally at least 35%, optionally at least 40%, optionally at least 45%, optionally at least 50% (w/w) fat.

Preferably, the food or cheese analogue mass comprises at least 25% (w/w) fat.

Optionally, the food or cheese analogue mass comprises at least 10% (w/w) oil. Further optionally, the food or cheese analogue mass comprises at least 15%, optionally at least 20%, optionally at least 25%, optionally at least 25.5%, optionally at least 25.7%, optionally at least 30%, optionally at least 35%, optionally at least 40%, optionally at least 45%, optionally at least 50% (w/w) oil.

Preferably, the food or cheese analogue mass comprises at least 25% (w/w) oil.

Optionally, the food or cheese analogue mass comprises at least 10% (w/w) coconut oil. Further optionally, the food or cheese analogue mass comprises at least 15%, optionally at least 20%, optionally at least 25%, optionally at least 25.5%, optionally at least 25.7%, optionally at least 30%, optionally at least 35%, optionally at least 40%, optionally at least 45%, optionally at least 50% (w/w) coconut oil.

Preferably, the food or cheese analogue mass comprises at least 25% (w/w) coconut oil.

Optionally, the thickener is a starch. Further optionally, the thickener is a modified starch. Still further optionally, the thickener is a combination of starch and modified starch.

Optionally, the modified starch is a dextrin.

Optionally, the modified starch is selected from modified maize (corn), modified tapioca, modified arrowroot, modified wheat, modified rice, modified pea and modified potato. Further optionally, the modified starch is selected from maize (corn) dextrin, tapioca dextrin, arrowroot dextrin, wheat dextrin, rice dextrin, pea dextrin and potato dextrin.

Optionally, the modified starch is a modified tapioca. Further optionally, the modified starch is a tapioca dextrin.

Optionally or additionally, the modified starch is a modified potato. Further optionally, the modified starch is a potato dextrin.

Preferably, the modified starch is a modified tapioca starch.

Preferably or additionally, the modified starch is a modified potato starch.

Preferably, the modified starch is a combination of modified tapioca starch and modified potato starch.

Optionally, the modified starch has a dextrose equivalent (DE) of less than 20%, optionally less than 15%, optionally less than 10%, optionally 1-10%, optionally 1-5%, optionally 2-5%, optionally 3-5%, optionally 4%.

Preferably, the modified starch has a dextrose equivalent (DE) of 3-5%.

Optionally, the food or cheese analogue mass comprises at least 2.0% (w/w) thickener. Further optionally, the food or cheese analogue mass comprises at least 2.5%, optionally at least 3.0%, optionally at least 5.0%, optionally at least 7.5%, optionally at least 10.0%, optionally at least 10.5%, optionally at least 12.5%, optionally at least 15.0%, optionally at least 17.5%, optionally at least 20% (w/w) thickener.

Preferably, the food or cheese analogue mass comprises at least 10% (w/w) thickener.

Optionally, the food or cheese analogue mass comprises at least 2.0% (w/w) starch. Further optionally, the food or cheese analogue mass comprises at least 2.5%, optionally at least 3.0%, optionally at least 5.0%, optionally at least 7.5%, optionally at least 10.0%, optionally at least 10.5%, optionally at least 12.5%, optionally at least 15.0%, optionally at least 17.5%, optionally at least 20% (w/w) starch.

Preferably, the food or cheese analogue mass comprises at least 10% (w/w) starch.

Optionally, the food or cheese analogue mass comprises at least 2.0% (w/w) modified starch. Further optionally, the food or cheese analogue mass comprises at least 2.5%, optionally at least 3.0%, optionally at least 5.0%, optionally at least 7.5%, optionally at least 10.0%, optionally at least 10.5%, optionally at least 12.5%, optionally at least 15.0%, optionally at least 17.5%, optionally at least 20% (w/w) modified starch.

Preferably, the food or cheese analogue mass comprises at least 10% (w/w) modified starch.

Optionally, the food or cheese analogue mass comprises at least 2.0% (w/w) modified tapioca. Further optionally, the food or cheese analogue mass comprises at least 2.5%, optionally at least 3.0%, optionally at least 5.0%, optionally at least 7.5%, optionally at least 10.0%, optionally at least 10.5%, optionally at least 12.5%, optionally at least 15.0%, optionally at least 17.5%, optionally at least 20% (w/w) modified tapioca.

Preferably, the food or cheese analogue mass comprises at least 7.5% (w/w) modified tapioca.

Optionally, the food or cheese analogue mass comprises at least 2.0% (w/w) modified potato. Further optionally, the food or cheese analogue mass comprises at least 2.5%, optionally at least 3.0%, optionally at least 5.0%, optionally at least 7.5%, optionally at least 10.0%, optionally at least 10.5%, optionally at least 12.5%, optionally at least 15.0%, optionally at least 17.5%, optionally at least 20% (w/w) modified potato.

Preferably, the food or cheese analogue mass comprises at least 3.0% (w/w) modified potato.

Preferably, the food or cheese analogue mass comprises at least 7.5% (w/w) modified tapioca and at least 3.0% (w/w) modified potato.

Optionally, the gelling agent is selected from at least one gum, at least one hydrocolloid, or combinations each thereof.

Preferably, the gelling agent is selected from at least one hydrocolloid.

Optionally, the at least one gum is selected from xanthan gum, bean gum or locust bean gum, guar gum, gum arabic, gum ghatti, gum karaya, gum tragacanth, gellan gum, and combination each thereof.

Optionally, the at least one hydrocolloid is selected from carrageenan, cellulose, carboxymethyl cellulose, microcrystalline cellulose, methylcellulose hydroxypropyl methyl cellulose, hydroxypropyl cellulose, pectin, low methoxyl pectin, gelatin, agar, furcellaran, dextran, and combinations each thereof.

Optionally, the at least one hydrocolloid is selected from κ-carrageenan, ι-carrageenan, λ-carrageenan, and combinations each thereof.

Preferably, the at least one hydrocolloid is κ-carrageenan.

Optionally, the food or cheese analogue mass comprises at least 0.5% (w/w) gelling agent. Further optionally, the food or cheese analogue mass comprises at least 0.75%, optionally at least 1.0%, optionally at least 1.25%, optionally at least 1.5%, optionally at least 1.6%, optionally at least 1.75%, optionally at least 2.0%, optionally at least 2.25%, optionally at least 2.5% , optionally at least 2.75%, optionally at least 3.0% (w/w) gelling agent.

Preferably, the food or cheese analogue mass comprises at least 1.5% (w/w) gelling agent.

Optionally, the food or cheese analogue mass comprises at least 0.5% (w/w) at least one hydrocolloid. Further optionally, the food or cheese analogue mass comprises at least 0.75%, optionally at least 1.0%, optionally at least 1.25%, optionally at least 1.5%, optionally at least 1.6%, optionally at least 1.75%, optionally at least 2.0%, optionally at least 2.25%, optionally at least 2.5% , optionally at least 2.75%, optionally at least 3.0% (w/w) at least one hydrocolloid.

Preferably, the food or cheese analogue mass comprises at least 1.5% (w/w) at least one hydrocolloid.

Optionally, the food or cheese analogue mass comprises at least 0.5% (w/w) at least one carrageenan. Further optionally, the food or cheese analogue mass comprises at least 0.75%, optionally at least 1.0%, optionally at least 1.25%, optionally at least 1.5%, optionally at least 1.6%, optionally at least 1.75%, optionally at least 2.0%, optionally at least 2.25%, optionally at least 2.5% , optionally at least 2.75%, optionally at least 3.0% (w/w) at least one carrageenan.

Preferably, the food or cheese analogue mass comprises at least 1.5% (w/w) at least one carrageenan.

Optionally, the food or cheese analogue mass comprises at least 0.5% (w/w) κ-carrageenan. Further optionally, the food or cheese analogue mass comprises at least 0.75%, optionally at least 1.0%, optionally at least 1.25%, optionally at least 1.5%, optionally at least 1.6%, optionally at least 1.75%, optionally at least 2.0%, optionally at least 2.25%, optionally at least 2.5% , optionally at least 2.75%, optionally at least 3.0% (w/w) κ-carrageenan.

Preferably, the food or cheese analogue mass comprises at least 1.5% (w/w) κ-carrageenan.

Optionally, the food or cheese analogue mass further comprises salt.

Optionally, the food or cheese analogue mass further comprises a chloride salt. Further optionally, the food or cheese analogue mass further comprises a sodium chloride salt.

Optionally, the food or cheese analogue mass comprises at least 0.5% (w/w) salt. Further optionally, the food or cheese analogue mass comprises at least 0.75%, optionally at least 1.0%, optionally at least 1.25%, optionally at least 1.5%, optionally at least 1.75%, optionally at least 1.95%, optionally at least 2.0%, optionally at least 2.25%, optionally at least 2.5% , optionally at least 2.75%, optionally at least 3.0% (w/w) salt.

Preferably, the food or cheese analogue mass comprises at least 1.5% (w/w) salt.

Optionally, the food or cheese analogue mass further comprises an anti-caking agent.

Optionally, the anti-caking agent is at least one lecithin.

Further optionally, the anti-caking agent is selected from egg yolk lecithin, soybean lecithin, milk lecithin, rapeseed lecithin, cottonseed lecithin, sunflower lecithin, and combinations each thereof.

Preferably, the anti-caking agent is sunflower lecithin.

Optionally, the food or cheese analogue mass comprises less than 1.0% (w/w) anti-caking agent. Further optionally, the food or cheese analogue mass comprises less than 0.9% (w/w), optionally less than 0.8%, optionally less than 0.7%, optionally less than 0.6%, optionally less than 0.5%, optionally less than 0.4%, optionally less than 0.3%, optionally less than 0.2%, optionally less than 0.1% (w/w) anti-caking agent.

Preferably, the food or cheese analogue mass comprises less than 1.0% (w/w) anti-caking agent.

Optionally, the food or cheese analogue mass comprises less than 1.0% (w/w) of at least one lecithin. Further optionally, the food or cheese analogue mass comprises less than 0.9% (w/w), optionally less than 0.8%, optionally less than 0.7%, optionally less than 0.6%, optionally less than 0.5%, optionally less than 0.4%, optionally less than 0.3%, optionally less than 0.2%, optionally less than 0.1% (w/w) of at least one lecithin.

Preferably, the food or cheese analogue mass comprises less than 1.0% (w/w) of at least one lecithin.

Optionally, the food or cheese analogue mass comprises less than 1.0% (w/w) sunflower lecithin. Further optionally, the food or cheese analogue mass comprises less than 0.9% (w/w), optionally less than 0.8%, optionally less than 0.7%, optionally less than 0.6%, optionally less than 0.5%, optionally less than 0.4%, optionally less than 0.3%, optionally less than 0.2%, optionally less than 0.1% (w/w) sunflower lecithin.

Preferably, the food or cheese analogue mass comprises less than 1.0% (w/w) sunflower lecithin.

Optionally, the food or cheese analogue mass further comprises at least one acidity regulator.

Optionally, the at least one acidity regulator is selected from citric acid, sorbic acid, acetic acid, benzoic acid, propionic acid, and combinations each thereof.

Further optionally, the at least one acidity regulator is selected from a sodium salt of any of citric acid, sorbic acid, acetic acid, benzoic acid, and propionic acid.

Preferably, the at least one acidity regulator is citric acid.

Optionally, the food or cheese analogue mass comprises at least 0.05% (w/w) at least one acidity regulator. Further optionally, the food or cheese analogue mass comprises at least 0.05% (w/w), optionally at least 0.07% (w/w), optionally at least 0.09% (w/w), optionally at least 0.1% (w/w), optionally at least 0.12% (w/w), optionally at least 0.13% (w/w), optionally at least 0.5% (w/w) at least one acidity regulator.

Preferably, the food or cheese analogue mass comprises at least 0.13% (w/w) at least one acidity regulator.

Optionally, the food or cheese analogue mass comprises at least 0.05% (w/w) citric acid. Further optionally, the food or cheese analogue mass comprises at least 0.05% (w/w), optionally at least 0.07% (w/w), optionally at least 0.09% (w/w), optionally at least 0.1% (w/w), optionally at least 0.12% (w/w), optionally at least 0.13% (w/w), optionally at least 0.5% (w/w) citric acid.

Preferably, the food or cheese analogue mass comprises at least 0.13% (w/w) citric acid.

Optionally, the food or cheese analogue mass comprises substantially no emulsifiers. Further optionally, the food or cheese analogue mass comprises no emulsifiers.

Optionally, the food or cheese analogue mass comprises substantially none of any of sodium, potassium or calcium salts of fatty acids; magnesium salts of fatty acids; mono- or diglycerides of fatty acids (glyceryl monostearate, glyceryl distearate); acetic acid esters of mono- or diglycerides of fatty acids; lactic acid esters of mono- or diglycerides of fatty acids; citric acid esters of mono- or diglycerides of fatty acids; tartaric acid esters of mono- or diglycerides of fatty acids; mono- or diacetyl tartaric acid esters of mono- or diglycerides of fatty acids; mixed acetic and tartaric acid esters of mono- or diglycerides of fatty acids; succinylated monoglycerides; sucrose esters of fatty acids; sucroglycerides; polyglycerol esters of fatty acids; polyglycerol polyricinoleate; propane-1,2-diol esters of fatty acids, propylene glycol esters of fatty acids; lactylated fatty acid esters of glycerol and propane-1; thermally oxidized soya bean oil interacted with mono- or diglycerides of fatty acids; dioctyl sodium sulfosuccinate; sodium stearoyl-2-lactylate; calcium stearoyl-2-lactylate; stearyl tartrate; stearyl citrate; sodium stearoyl fumarate; calcium stearoyl fumarate; sodium laurylsulfate; ethoxylated mono- or diglycerides; methyl glucoside-coconut oil ester; propane-1,2-diol; sorbitan monostearate; sorbitan tristearate; sorbitan monolaurate; sorbitan monooleate; sorbitan monopalmitate; and sorbitan trioleate.

Optionally, the step of providing a food or cheese analogue mass comprises admixing at least two of protein, fat, thickener, and gelling agent to form an emulsion. Further optionally, the step of providing a food or cheese analogue mass comprises admixing at least three of protein, fat, thickener, and gelling agent to form an emulsion. Still further optionally, the step of providing a food or cheese analogue mass comprises admixing protein, fat, thickener, and gelling agent to form an emulsion.

Optionally, the step of providing a food or cheese analogue mass comprises admixing protein and fat to form an emulsion; and admixing thickener and gelling agent to the emulsion.

Optionally, the step of providing a food or cheese analogue mass comprises admixing protein and thickener to form an emulsion; and admixing fat and gelling agent to the emulsion.

Optionally, the step of providing a food or cheese analogue mass comprises admixing thickener and fat to form an emulsion; and admixing protein and gelling agent to the emulsion.

Optionally, the step of providing a food or cheese analogue mass comprises admixing protein, fat, and thickener to form an emulsion; and admixing gelling agent to the emulsion.

Optionally, the step of providing a food or cheese analogue mass comprises admixing at least two of protein, fat, thickener, and gelling agent with water to form an emulsion. Further optionally, the step of providing a food or cheese analogue mass comprises admixing at least three of protein, fat, thickener, and gelling agent with water to form an emulsion. Still further optionally, the step of providing a food or cheese analogue mass comprises admixing protein, fat, thickener, and gelling agent with water to form an emulsion.

Optionally, the step of providing a food or cheese analogue mass comprises admixing protein and fat with water to form an emulsion; and admixing thickener and gelling agent to the emulsion.

Optionally, the step of providing a food or cheese analogue mass comprises admixing protein and thickener with water to form an emulsion; and admixing fat and gelling agent to the emulsion.

Optionally, the step of providing a food or cheese analogue mass comprises admixing thickener and fat wither water to form an emulsion; and admixing protein and gelling agent to the emulsion.

Optionally, the step of providing a food or cheese analogue mass comprises admixing protein, fat, and thickener with water to form an emulsion; and admixing gelling agent to the emulsion.

Optionally, the step of providing a food or cheese analogue mass comprises admixing at least two of plant protein, plant fat, modified starch, and hydrocolloid with water to form an emulsion.

Further optionally, the step of providing a food or cheese analogue mass comprises admixing at least two of pea protein, coconut oil, modified tapioca starch and modified potato starch, and carrageenan with water to form an emulsion.

Still further optionally, the step of providing a food or cheese analogue mass comprises admixing at least two of 5.0% (w/w) pea protein, 25.0% (w/w) coconut oil, 7.5% (w/w) modified tapioca starch and 3.0% (w/w) modified potato starch, and 1.6% (w/w) carrageenan with water to form an emulsion.

Optionally, the method comprises the steps of:
(a) admixing at least two of protein, fat, thickener, and gelling agent to form an emulsion;
(b) forming at least a first and a subsequent slice from the food or cheese analogue mass; and
(c) contacting the first and subsequent slices to form a stack.

Optionally or additionally, the step of providing a food or cheese analogue mass comprises heating at least two of protein, fat, thickener, and gelling agent to form an emulsion.

Optionally, the heating step comprises heating to a temperature of greater than 50°C. Further optionally, the heating step comprises heating to a temperature of greater than 55°C, optionally greater than 60°C, optionally greater than 65°C, optionally greater than 70°C, optionally greater than 75°C, optionally greater than 80°C, optionally greater than 85°C, optionally greater than 90°C, optionally greater than 95°C, optionally greater than 100°C, optionally greater than 105°C, optionally greater than 110°C, optionally greater than 115°C, optionally greater than 120°C, optionally greater than 125°C, optionally greater than 130°C, optionally greater than 135°C.

Preferably, the heating step comprises heating to a temperature of greater than 80°C.

Optionally, the method comprises the steps of:
(a) admixing and heating at least two of protein, fat, thickener, and gelling agent to form an emulsion;
(b) forming at least a first and a subsequent slice from the food or cheese analogue mass; and
(c) contacting the first and subsequent slices to form a stack.

Optionally or additionally, the step of providing a food or cheese analogue mass comprises agitating at least two of protein, fat, thickener, and gelling agent to form an emulsion. Further optionally or additionally, the step of providing a food or cheese analogue mass comprises stirring at least two of protein, fat, thickener, and gelling agent to form an emulsion. Still further optionally or additionally, the step of providing a food or cheese analogue mass comprises mixing, optionally high shear mixing, at least two of protein, fat, thickener, and gelling agent to form an emulsion. Still further optionally or additionally, the step of providing a food or cheese analogue mass comprises homogenising at least two of protein, fat, thickener, and gelling agent to form an emulsion.

Optionally, the method comprises the steps of:
(a) admixing, heating, and agitating at least two of protein, fat, thickener, and gelling agent to form an emulsion;
(b) forming at least a first and a subsequent slice from the food or cheese analogue mass; and
(c) contacting the first and subsequent slices to form a stack.

Optionally, the step of providing a food or cheese analogue mass further comprises cooling. Further optionally, the step of providing a food or cheese analogue mass further comprises cooling the emulsion.

Optionally, the cooling step comprises cooling to a temperature of less than 50°C. Further optionally, the cooling step comprises cooling to a temperature of less than 45°C, optionally less than 40°C, optionally less than 35°C, optionally less than 30°C, optionally less than 25°C, optionally less than 20°C, optionally less than 15°C, optionally less than 10°C, optionally less than 5°C.

Preferably, the cooling step comprises cooling to a temperature of less than 20°C.

Optionally, the method comprises the steps of:
(a) admixing, heating, and agitating at least two of protein, fat, thickener, and gelling agent to form an emulsion;
(b) cooling the emulsion;
(c) forming at least a first and a subsequent slice from the food or cheese analogue mass; and
(d) contacting the first and subsequent slices to form a stack.

Optionally, the step of providing a food or cheese analogue mass comprises providing a food or cheese analogue sheet.

Optionally, the step of providing a food or cheese analogue mass comprises extruding a food or cheese analogue mass. Further optionally, the step of providing a food or cheese analogue mass comprises extruding a food or cheese analogue sheet.

Optionally, the step of providing a food or cheese analogue mass comprises extruding a continuous food or cheese analogue mass. Further optionally, the step of providing a food or cheese analogue mass comprises extruding a continuous food or cheese analogue sheet.

Optionally, the method comprises the steps of:
(a) providing a food or cheese analogue mass;
(b) extruding a food or cheese analogue sheet;
(c) forming at least a first and a subsequent slice from the food or cheese analogue mass; and
(d) contacting the first and subsequent slices to form a stack.

Further optionally, the method comprises the steps of:
(e) admixing, heating, and agitating at least two of protein, fat, thickener, and gelling agent to form an emulsion;
(f) cooling the emulsion;
(g) extruding a food or cheese analogue sheet;
(h) forming at least a first and a subsequent slice from the food or cheese analogue mass; and
(i) contacting the first and subsequent slices to form a stack.

Optionally, the step of contacting the first and subsequent slices forms a contiguous stack. Further optionally, the step of contacting the first and subsequent slices forms a contiguous stack of the first and subsequent slices. Still further optionally, the step of contacting the first and subsequent slices forms a contiguous stack of individual first and subsequent slices. Still further optionally, the step of contacting the first and subsequent slices forms a contiguous stack of separable first and subsequent slices.

Optionally, the stack comprises at least 2 slices. Further optionally, the stack comprises at least 10, optionally at least 20, optionally at least 30, optionally at least 40, optionally at least 50, optionally at least 60, optionally at least 80, optionally at least 90, optionally at least 100 slices.

Optionally, each slice weighs at least 6g. Further optionally, each slice weighs at least 8g, optionally at least 10g, optionally at least 12g, optionally at least 14g, optionally at least 16g, optionally at least 18g, optionally at least 20g, optionally at least 22g.

Optionally, the method comprises the steps of:
(a) providing a food or cheese analogue mass;
(b) extruding a food or cheese analogue sheet;
(c) forming at least a first and a subsequent slice from the food or cheese analogue mass; and
(d) contacting the first and subsequent slices to form a contiguous stack of separable first and subsequent slices.

Further optionally, the method comprises the steps of:
(e) admixing, heating, and agitating at least two of protein, fat, thickener, and gelling agent to form an emulsion;
(f) cooling the emulsion;
(g) extruding a food or cheese analogue sheet;
(h) forming at least a first and a subsequent slice from the food or cheese analogue mass; and
(i) contacting the first and subsequent slices to form a contiguous stack of separable first and subsequent slices.

Preferably, the method comprises the steps of:
(a) admixing, heating, and agitating at least two of pea protein, coconut oil, modified starch, and hydrocolloid to form an emulsion;
(b) cooling the emulsion;
(c) extruding a food or cheese analogue sheet;
(d) forming at least a first and a subsequent slice from the food or cheese analogue mass; and
(e) contacting the first and subsequent slices to form a contiguous stack of separable first and subsequent slices.

Further preferably, the method comprises the steps of:
(a) admixing, heating, and agitating at least two of 5.0% (w/w) pea protein, 25.0% (w/w) coconut oil, 7.5% (w/w) modified tapioca starch and 3.0% (w/w) modified potato starch, and 1.6% (w/w) carrageenan with water to form an emulsion;
(b) cooling the emulsion;
(c) extruding a food or cheese analogue sheet;
(d) forming at least a first and a subsequent slice from the food or cheese analogue mass; and
(e) contacting the first and subsequent slices to form a contiguous stack of separable first and subsequent slices.

Optionally, the forming at least a first and a subsequent slice from the food analogue mass step comprises cutting at least a first and a subsequent slice from the food analogue mass.

Optionally, the method comprising the steps of:
(a) providing a food analogue mass;
(b) cutting at least a first and a subsequent slice from the food analogue mass; and
(c) contacting the first and subsequent slices to form a stack.

### Brief Description of the Drawings

The invention will be described with reference to the accompanying drawings in which:
**Figure 1** illustrates slices separable by hand without breaking or tearing; and
**Figure 2** illustrates comparative samples, which do not form a contiguous stack and are not separable by hand, readily breaking and tearing.

### Examples

The invention will now be described with reference to the following non-limiting examples.

### Example 1

A cheese analogue mass was prepared by admixing 5.0% (w/w) pea protein (Ingredion UK Limited), 25.7% (w/w) coconut oil (Cargill GmbH, Hamburg), 7.5% (w/w) modified tapioca starch (Ingredion UK Limited) and 3.0% (w/w) modified potato starch (Ingredion UK Limited), and 1.6% (w/w) carrageenan (Kerry (NL) B.V.) with 45.5% (w/w) water in a large (5,000kg) pre-blender where they are mixed using twin screw augers (such as Karl Schnell, DE).

The mixture was heated to a temperature of 90°C using direct or indirect heating means with high shear mixing at 900 rpm using a batch or continuous cooking system until an emulsion formed.

The emulsion was extruded as a cheese analogue sheet by depositing the cooled emulsion onto a continuous casting belt. The emulsion was deposited on to a casting belt using industry standard technology comprising two stainless steel conveyor belts, cooling pans, food manifold, set of slitters, and twist and stack unit (such as HART Design & Manufacturing, Inc). The cheese analogue sheet thickness is obtained by adjusting manifold valves and thickness bar, and weight control is accomplished by varying the cheese pump speed.

The emulsion was cooled to a temperature of less than 20°C. Cooling of the casting line is accomplished with cooling pans. As the stainless steel conveyor belt passes over the cooling pans, coolant or chilled water is pumped into the pans and cools the belt, which in turn cools the cheese.

The extruded cheese analogue sheet was cut into slices/ribbons; each slice weighing approximately 14g. Once the cheese analogue sheet reaches the opposite end of the conveyor, the cheese analogue sheet is directed around the end drum, over the doctor blade and onto the lower stainless steel belt. After the cheese analogue sheet passes over the lower belt and is slit into ribbons, the ribbons are directed over transfer rolls and through the twist and stack section.

Each of the cut slices was stacked to form a contiguous stack of desired number, which is then packed using an automatic packing machine which may be modified atmosphere depending on requirements Each of the cut slices was stacked to form a contiguous stack of 56 separable slices.

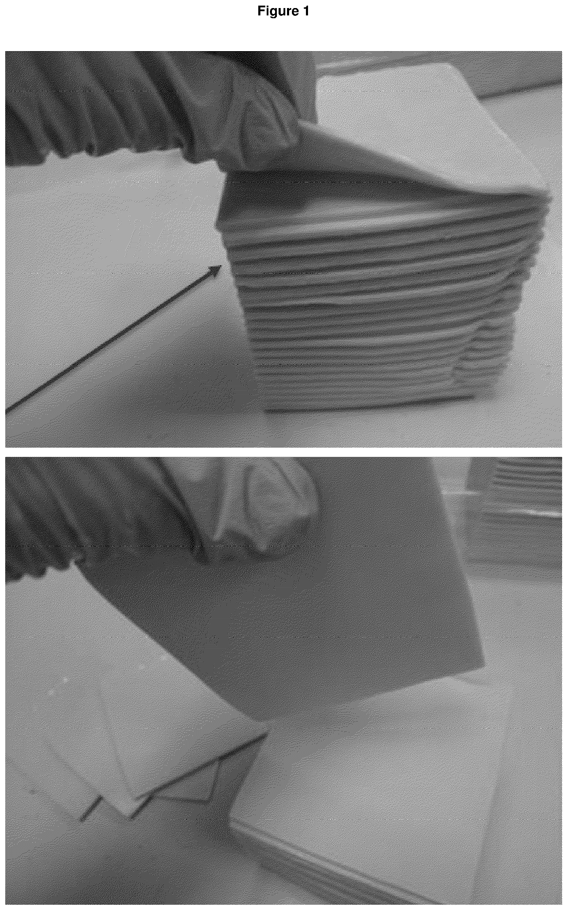

The stored slices were easily separable by hand without breaking or tearing (see Figure 1).

### Example 2

A comparative cheese analogue mass was prepared in accordance with Example 1 by admixing 10.0% (w/w) pea protein, 25.0% (w/w) coconut oil, 1.5% (w/w) modified potato starch, and 1.0% (w/w) hydrocolloids with 45.7% (w/w) water. The mixture was heated with high shear mixing until an emulsion formed. The emulsion was extruded as a cheese analogue sheet by depositing the cooled emulsion onto a continuous casting belt. The extruded cheese analogue sheet was cut into slices/ribbons. Each of the cut slices was stacked to form a contiguous stack of desired number.

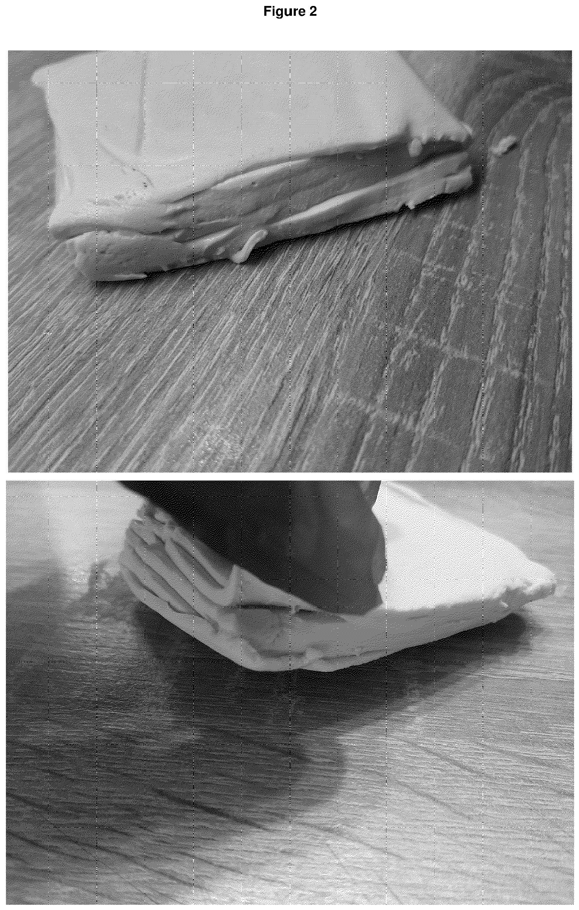

The stored slices did not form a contiguous stack and were not separable by hand, readily breaking and tearing (see Figure 2).

The present invention accordingly provides a method of producing a stacked, sliced plant-based food product analogue in a convenient and practical way, which reduces the requirement for superfluous packaging and thereby reduces the complexity of the method of preparation, associated costs, and ultimately the environmental impact. The present invention also provides a method that can be readily implemented at industrial scale.

## Claims

1. A method of producing a stacked, sliced food analogue; the method comprising the steps of:
(a) providing a food analogue mass;
(b) forming at least a first and a subsequent slice from the food analogue mass; and
(c) contacting the first and subsequent slices to form a stack.

2. A method according to Claim 1, wherein the food analogue mass comprises protein, fat, thickener, and gelling agent.

3. A method according to Claim 2, wherein the food analogue further comprises at least 45.5% (w/w) liquid water and at least 8.5% (w/w) gaseous water.

4. A method according to any one of Claims 1-3, wherein the food analogue mass comprises at least 5.0% (w/w) protein.

5. A method according to any one of Claims 1-4, wherein the food analogue mass comprises at least 25% (w/w) fat.

6. A method according to any one of Claims 1-5, wherein the food analogue mass comprises a thickener, which is a starch and/or a modified starch.

7. A method according to Claim 6, wherein the modified starch is a combination of modified tapioca starch and modified potato starch.

8. A method according to any one of Claims 1-7, wherein the food analogue mass comprises at least 10% (w/w) thickener.

9. A method according to any one of Claims 1-8, wherein the food analogue mass comprises at least 1.5% (w/w) gelling agent.

10. A method according to any one of Claims 1-9, wherein the step of providing a food analogue mass comprises admixing at least two of 5.0% (w/w) pea protein, 25.0% (w/w) coconut oil, 7.5% (w/w) modified tapioca starch and 3.0% (w/w) modified potato starch, and 1.6% (w/w) carrageenan with water to form an emulsion.

11. A method according to any one of Claims 1-10, wherein the step of providing a food analogue mass comprises heating at least two of protein, fat, thickener, and gelling agent to a temperature of greater than 80°C to form an emulsion.

12. A method according to any one of Claims 1-11, wherein the step of providing a food analogue mass further comprises cooling the emulsion to a temperature of less than 20°C.

13. A method according to any one of Claims 1-12, wherein the step of contacting the first and subsequent slices forms a contiguous stack of separable first and subsequent slices.

14. A method according to any one of Claims 1-13, wherein the stack comprises at least 50 slices.

15. A method according to any one of Claims 1-14, wherein each slice weighs at least 14g.

## Amended claims

### Amended claims in accordance with Rule 137(2) EPC.

1. A method of producing a stacked, sliced food analogue; the method comprising the steps of:
(a) providing a food analogue mass comprising at least 2.5% (w/w) protein, at least 10% (w/w) fat, at least 10% (w/w) starch and/or modified starch,and at least 0.5% (w/w) gelling agent selected from at least one gum, at least one hydrocolloid, or combinations each thereof;
(b) forming at least a first and a subsequent slice from the food analogue mass; and
(c) contacting the first and subsequent slices to form a stack.

2. A method according to claim 1, wherein the food analogue mass further comprises at least 45.5% (w/w) liquid water and at least 8.5% (w/w) gaseous water.

3. A method according to claim 1 or 2, wherein the food analogue mass comprises at least 5.0% (w/w) protein.

4. A method according to any one of claims 1-3, wherein the food analogue mass comprises at least 25% (w/w) fat.

5. A method according to any one of clams 1-4, wherein the modified starch is a combination of modified tapioca starch and modified potato starch.

6. A method according to any one of claims 1-5, wherein the food analogue mass comprises at least 1.5% (w/w) gelling agent.

7. A method according to any one of claims 1-6, wherein the step of providing a food analogue mass comprises admixing at least two of 5.0% (w/w) pea protein, 25.0% (w/w) coconut oil, 7.5% (w/w) modified tapioca starch and 3.0% (w/w) modified potato starch, and 1.6% (w/w) carrageenan with water to form an emulsion.

8. A method according to any one of claims 1-7, wherein the step of providing a food analogue mass comprises heating at least two of the protein, the fat, the starch and/or modified starch, and the gelling agent to a temperature of greater than 80°C to form an emulsion.

9. A method according to any one of claims 1-8, wherein the step of providing a food analogue mass further comprises cooling the food analogue mass to a temperature of less than 20°C.

10. A method according to any one of claims 1-9, wherein the step of contacting the first and subsequent slices forms a contiguous stack of separable first and subsequent slices.

11. A method according to any one of claims 1-10, wherein the stack comprises at least 50 slices.

12. A method according to any one of claims 1-11, wherein each slice weighs at least 14g.
